# EUROPÄISCHE PATENTANMELDUNG

(11) **EP 4 521 362 A1**
(43) Veröffentlichungstag der Anmeldung: **12.03.2025**
(21) Anmeldenummer: 23196360.4
(22) Anmeldetag: 08.09.2023
(51) Int. Cl.: G06V 20/00

(54) **SYSTEM ZUR ERLEDIGUNG VON ARBEITSAUFGABEN, AUFWEISEND MINDESTENS EIN ARBEITSGERÄT UND MINDESTENS EINE DATENVERARBEITUNGSEINHEIT**

(71) Anmelder: Vorwerk & Co. Interholding GmbH, 42275 Wuppertal (DE)
(72) Erfinder: WENJIE, Yan, 40549 Düsseldorf (DE); BIROL, Ceylan, 44359 Dortmund (DE); WIEDMANN, Peter, 40211 Düsseldorf (DE); BRÜNING, Peter, 40822 Mettmann (DE); LESSEL, Thomas, 42551 Velbert (DE); REGIER, Peter, 47057 Duisburg (DE); STOGL, Denis, 76131 Karlsruhe (DE)
(74) Vertreter: Dr. Solf & Zapf Patent- und Rechtsanwalts PartG mbB

(57) **Zusammenfassung**

Die vorliegende Erfindung betrifft ein System (1), aufweisend mindestens ein Arbeitsgerät (3) und mindestens eine Datenverarbeitungseinheit (4), wobei das Arbeitsgerät (3) mindestens eine Sensoreinheit (8) aufweist und zur autonomen Fortbewegung in einer Umgebung (9) ausgebildet und eingerichtet ist,
wobei die Datenverarbeitungseinheit (4) mindestens einen Prozessor (510) und mindestens einen Speicher (525) aufweist,
wobei die Datenverarbeitungseinheit (4) zum Bestimmen (205) von räumlichen Umgebungsdaten mit der Sensoreinheit (8),
zum Erkennen (210) mindestens eines Objekts (2) in den räumlichen Umgebungsdaten,
zum Ermitteln (215) mindestens eines Objektparameters des Objekts (2) unter Verwendung zumindest eines Teils der räumlichen Umgebungsdaten, und zur Auswahl (220) mindestens einer Aktion des Arbeitsgeräts (3) in Bezug auf das Objekt (2) in Abhängigkeit von dem mindestens einen, ermittelten Objektparameter ausgebildet und eingerichtet ist.

## Beschreibung

Die Erfindung betrifft ein System zur Erledigung von Arbeitsaufgaben in einer Umgebung, ein Verfahren und ein Computerprogrammprodukt. Das System weist mindestens ein Arbeitsgerät und mindestens eine Datenverarbeitungseinheit auf.

Aus dem Stand der Technik sind Systeme mit Arbeitsgeräten bekannt, die sich autonom in einer Umgebung fortbewegen und beispielsweise Arbeitsaufgaben erledigen. Bei den Arbeitsgeräten handelt es sich insbesondere um autonome Fahrzeuge oder Roboter. Bei der Fortbewegung muss eine Kollision mit Objekten in der Umgebung zuverlässig verhindert werden. Ein häufig verwendeter Ansatz zur Erkennung von Objekten durch Arbeitsgeräte besteht in der Nutzung von Kamera- und Bildverarbeitungssystemen. Moderne Arbeitsgeräte sind oft mit hochentwickelten Kameras ausgestattet, die visuelle Informationen über ihre Umgebung liefern. Mithilfe dieser visuellen Daten können sie effizient navigieren und Objekte identifizieren, um Kollisionen zu verhindern.

Mindestens eine Kamera des Arbeitsgeräts erfasst dabei in regelmäßigen Abständen Bilder der Umgebung, die von einer Datenverarbeitungseinheit analysiert werden. Die Datenverarbeitungseinheit ist üblicherweise dazu ausgebildet und eingerichtet, verschiedene Objekte und Hindernisse zu erkennen, indem sie beispielsweise Merkmale wie Formen, Farben und Texturen in Bilddaten interpretiert.

Bei aus dem Stand der Technik bekannten Systemen werden Objekterkennungsalgorithmen, insbesondere unter Verwendung neuronaler Netze, oftmals mittels pixelgenauer Kennzeichnung von Objekten in Referenzbildern auf die Objekterkennung trainiert. Diese Methode ist aufgrund des hohen Aufwands für die Erstellung der Trainingsdaten sehr aufwändig und kostenintensiv. Ferner können rein bildbasierte Systeme nur Informationen über das Aussehen eines Objekts liefern, so dass durch optische Effekte in den Bilddaten fälschlicherweise ein Objekt erkannt wird, das tatsächlich keine oder eine abweichende dreidimensionale Form aufweist.

Der vorliegenden Erfindung liegt daher die Aufgabe zugrunde, ein System, ein Verfahren und ein Computerprogrammprodukt anzugeben, die eine autonome Fortbewegung eines Arbeitsgeräts in einer Umgebung gewährleisten, und die eine Erkennung von Objekten bei der Fortbewegung zuverlässig sicherstellen.

Die vorgenannte Aufgabe ist mit einem System gemäß Anspruch 1 gelöst. Das System weist mindestens ein Arbeitsgerät und mindestens eine Datenverarbeitungseinheit auf. Das Arbeitsgerät weist mindestens eine Sensoreinheit, insbesondere zur Erfassung von Umgebungsdaten, auf und ist zur autonomen Fortbewegung in einer Umgebung, insbesondere einer Bearbeitungsumgebung, sowie vorzugsweise zur Erledigung von Arbeitsaufgaben ausgebildet und eingerichtet. Vorzugsweise ist die Datenverarbeitungseinheit zur Steuerung des autonomen Bewegens und des Reinigens der Umgebung durch das Reinigungsgerät ausgebildet und eingerichtet.

Beispielsweise ist das Arbeitsgerät ein Reinigungsgerät, ein Transportgerät in der Transportlogistik oder ein Sicherheitsroboter zur Umgebungsüberwachung. Vorzugsweise ist das Arbeitsgerät ein Reinigungsgerät zum Reinigen einer Umgebung, insbesondere einer Bearbeitungsumgebung. Bei dem als Reinigungsgerät ausgebildeten Arbeitsgerät handelt es sich vorteilhaft um ein Reinigungsgerät mit Saug- und/oder Wischfunktion, insbesondere um einen Saugroboter, einen Wischroboter oder einen Saug- und Wischroboter. Das Arbeitsgerät weist mindestens ein Gehäuse auf, an dem vorteilhaft mindestens eine Antriebseinheit und mindestens ein Reinigungswerkzeug angeordnet sind. Die Antriebseinheit weist vorzugsweise mindestens zwei Antriebsräder auf.

Die Datenverarbeitungseinheit weist mindestens einen Prozessor und mindestens einen, insbesondere nichtflüchtigen, Speicher auf. Es ist insbesondere vorgesehen, dass zumindest ein Teil der Datenverarbeitungseinheit in dem Arbeitsgerät angeordnet ist. Vorzugsweise ist die Datenverarbeitungseinheit vollständig in dem Arbeitsgerät angeordnet. Bei dieser Ausführungsform werden folglich jegliche Rechenprozesse von dem Arbeitsgerät selbst erledigt.

Wenn nur ein - erster - Teil der Datenverarbeitungseinheit in dem Arbeitsgerät angeordnet ist, ist es insbesondere vorgesehen, dass ein weiterer - zweiter - Teil der Datenverarbeitungseinheit räumlich entfernt zu dem Arbeitsgerät angeordnet und mit diesem über eine Datenverbindung verbunden bzw. verbindbar ist. Beispielsweise ist der zweite Teil der Datenverarbeitungseinheit als räumlich zum Arbeitsgerät angeordneter Computer, insbesondere Server, ausgebildet. Das Arbeitsgerät weist vorteilhaft mindestens eine Datenschnittstelle auf, um eine Datenverbindung herzustellen oder um an ein Datennetz angebunden zu werden. Beispielsweise ist die Datenschnittstelle als Funkschnittstelle ausgebildet.

Ferner ist beispielweise vorgesehen, dass zumindest ein Teil der Datenverarbeitungseinheit über eine Datenverbindung, insbesondere ein Netzwerk, beispielsweise das Internet oder ein lokales Netzwerk, mit dem Arbeitsgerät verbunden ist bzw. verbindbar ist. Über das Netzwerk werden dann die Anforderungen für Rechenoperationen an die Datenverarbeitungseinheit übermittelt und das Ergebnis der Rechenoperationen von der Datenverarbeitungseinheit an das Arbeitsgerät - über die Datenschnittstelle - übermittelt.

Die Datenverarbeitungseinheit ist zum Bestimmen von räumlichen Umgebungsdaten unter Verwendung der Sensoreinheit ausgebildet und eingerichtet. Bei den räumlichen Umgebungsdaten handelt es sich beispielsweise um dreidimensionale Informationen, die die Umgebung des Arbeitsgeräts, insbesondere in Fahrtrichtung, repräsentieren. Beispielsweise sind die räumlichen Umgebungsdaten als dreidimensionale Punktwolke, insbesondere basierend auf Abstandswerten, darstellbar. Die räumlichen Umgebungsdaten werden beispielsweise direkt durch ein Erfassen erzeugt, z. B. mit einer Time-of-Flight-Kamera der Sensoreinheit, oder zumindest teilweise aus erfassten Umgebungsdaten indirekt berechnet, beispielsweise aus den erfassten Daten einer Stereokamera. Das Bestimmen der räumlichen Umgebungsdaten umfasst insbesondere das direkte Erfassen und/oder das Berechnen bzw. Generieren von räumlichen Umgebungsdaten aus von der Sensoreinheit erfassten Daten, die die Umgebung zumindest teilweise repräsentieren. Die räumlichen Umgebungsdaten werden vorzugsweise in regelmäßigen Abständen wiederholt neu bestimmt bzw. erfasst.

Es ist vorgesehen, dass die Datenverarbeitungseinheit die Sensoreinheit zum Bestimmen bzw. zum Erfassen ansteuert, oder dass die Sensoreinheit das Bestimmen bzw. Erfassen selbst durchführt. Die erfassten und/oder bestimmten Umgebungsdaten werden vorteilhaft an die Datenverarbeitungseinheit übermittelt bzw. dieser, z. B. in einem Speicher, bereitgestellt. Vorzugsweise weist die Sensoreinheit mindestens eine Kamera, insbesondere RGB-Kamera, mindestens einen Time-of-Flight-Sensor, insbesondere eine Time-of-Flight-Kamera, mindestens eine Stereokamera, mindestens einen Radarsensor, mindestens einen Ultraschallsensor und/oder mindestens einen Lidarsensor auf. Die Sensoreinheit ist vorzugsweise derart an dem Arbeitsgerät angeordnet, dass sie zumindest einen Teil der in Fahrtrichtung des Arbeitsgerätes orientierten Umgebung erfassen kann.

Es ist ferner vorteilhaft vorgesehen, dass die Sensoreinheit zur Ermittlung der räumlichen Umgebungsdaten mittels Tiefenschätzung, insbesondere mittels Triangulation und/oder Tiefe aus Fokus oder Tiefe aus Bewegung ausgebildet und eingerichtet ist. Die Sensoreinheit weist insbesondere mindestens oder genau einen, mindestens oder genau zwei oder mindestens oder genau drei Sensoren auf. Die Sensoreinheit ist vorteilhaft derart ausgebildet und eingerichtet, dass räumliche Umgebungsdaten erfasst bzw. ermittelt werden können.

Die Triangulation ist eine Methode zur Tiefenschätzung, bei der die räumliche Tiefe eines Punktes in einem Bild durch die Verwendung von Informationen aus zwei oder mehr Blickwinkeln berechnet wird. Die Triangulation verwendet trigonometrische Prinzipien, um die Entfernung zu schätzen. Bei der Ermittlung mittels Tiefe aus Fokus erfolgt eine Variation des Fokus in Bilddaten. Wenn die Kamera auf einen Punkt fokussiert ist, erscheint dieser scharf, während Objekte in unterschiedlicher Entfernung unscharf werden. Die Unschärfe kann verwendet werden, um auf die Tiefe zu schließen. Bei der Ermittlung mittels Tiefe aus Bewegung erfolgt die Verfolgung der Bewegung von Objekten zwischen aufeinanderfolgenden Bildern, wodurch die Tiefe geschätzt werden kann.

Time-of-Flight-Kameras werden auch PMD-Kameras genannt. Die Kamera ist insbesondere derart eingerichtet, dass sie für jeden Bildpunkt - jedes Pixel - eine Zeit misst, die das Licht bis zum Objekt und wieder zurück benötigt. Die Laufzeitdaten repräsentieren folglich vorteilhaft für jeden Bildpunkt die Entfernung des in den Bilddaten abgebildeten Objektes zur Kamera bzw. zum Arbeitsgerät.

Die Datenverarbeitungseinheit ist ferner zum Erkennen mindestens eines Objektes - sofern vorhanden - in den räumlichen Umgebungsdaten ausgebildet und eingerichtet. Das Erkennen umfasst insbesondere lediglich das Erkennen des Vorhandenseins eines Objektes in den Umgebungsdaten. Vorzugsweise umfasst das Erkennen mindestens eines Objektes in den Bilddaten ein Filtern und/oder ein Segmentieren zumindest eines Teils oder aller räumlichen Umgebungsdaten. Beispielsweise sind die räumlichen Umgebungsdaten als Punktwolke darstellbar, und das Filtern beinhaltet das Herausfiltern, also Entfernen, von Punkten, die einen vorbestimmten Schwellenwert überschreiten, beispielsweise in Bezug auf ihre Dimensionen, z. B. ihre Höhe und/oder ihre Breite. Ferner umfasst das Filtern z. B. das Herausfiltern von Bildpunkten, die zur Bodenoberfläche gehören, auf der sich das Reinigungsgerät bewegt. Des Weiteren umfasst das Segmentieren beispielsweise das Anwenden der euklidischen Clusterextraktionsmethode, insbesondere um die zu einem Objekt gehörenden Bildpunkte zu clustern.

Die Datenverarbeitungseinheit ist ferner zum anschließenden Ermitteln mindestens eines Objektparameters des Objektes unter Verwendung zumindest eines Teils der räumlichen Umgebungsdaten ausgebildet und eingerichtet. Vorzugsweise werden nur die Bildpunkte in den räumlichen Umgebungsdaten für das Ermitteln verwendet, die tatsächlich das Objekt repräsentieren. Beispielsweise wird im Rahmen des Ermittelns eine Geometrieanalyse des Objektes durchgeführt und einzelne geometrische Eigenschaften des Objektes als Objektparameter abgeleitet. Die geometrischen Eigenschaften können mittelbar oder unmittelbar sein. Eine unmittelbare Eigenschaft wäre die Breite des Objekts, eine mittelbare Eigenschaft der Durchmesser eines das Objekt umgebenden Kreises oder Rechtecks. Beispielsweise handelt es sich bei den Objektparametern um - mittelbare oder unmittelbare - geometrische Merkmale des Objekts. Vorzugsweise wird beim Ermitteln ein Satz von Objektparametern mit einer Mehrzahl von Objektparametern für jedes Objekt erstellt.

Ein Objektparameter ist beispielsweise eine Länge, eine Breite oder eine Höhe des Objektes. Ferner ist ein Objektparameter z. B. eine Länge, eine Höhe und/oder eine Breite eines das Objekt umgebenden Rechtecks, auch "Bounding Box" genannt. Ferner ist insbesondere eine Oberflächenbeschaffenheit, beispielsweise glatt, zerklüftet, rau, ein Objektparameter. Zudem sind insbesondere auch eine Richtung oder ein Winkel einer Oberflächennormalen, also einer Senkrechten auf einer Oberfläche des Objektes, jeweils ein Objektparameter. Ein Objekt kann vorteilhaft durch eine Mehrzahl von Objektparametern - einen Satz von Objektparametern - beschrieben bzw. charakterisiert werden.

Zudem ist die Datenverarbeitungseinheit dazu eingerichtet und ausgebildet, mindestens eine Aktion des Arbeitsgerätes in Bezug auf das Objekt in Abhängigkeit von dem ermittelten Objektparameter bzw. einem Satz ermittelter Objektparameter, insbesondere aus einer Mehrzahl von alternativen Aktionen, auszuwählen. Eine Aktion ist beispielsweise ein Fahrmanöver oder eine Handlungsweise des Arbeitsgeräts. In Abhängigkeit von dem Objektparameter bzw. den ermittelten Objektparametern wird folglich eine Auswahl getroffen, beispielsweise unter Verwendung eines Entscheidungsbaums, der das Wissen über die Handhabung eines Objektes auf der Grundlage von Objektparametern darstellt, die das weitere Verhalten des Arbeitsgerätes, insbesondere in Bezug auf die Fortbewegung, steuert.

Beispielsweise ist als auswählbare Aktion vorgesehen, dass das Arbeitsgerät zumindest temporär seine Fahrtrichtung ändert, um das Objekt zu umfahren, also das Objekt berührungslos zu passieren. Alternativ dazu kann als Aktion ausgewählt werden, dass ein geplanter Fahrweg des Arbeitsgeräts fortgesetzt wird. Das Fortsetzen des Fahrweges erfolgt beispielsweise, wenn kein Objekt oder ein sehr kleines und/oder sehr flaches Objekt erkannt worden ist. Insbesondere ist vorgesehen, dass ein Objekt, insbesondere unter Fortsetzung einer Reinigungsaufgabe des Arbeitsgeräts, überfahren wird. Das Überfahren erfolgt insbesondere immer dann, wenn ein Objekt zum Überfahren geeignet ist. Das Objekt wird insbesondere unter Verwendung mindestens eines Objektparameters als zum Überfahren geeignet bewertet.

Die Erfindung hat gegenüber dem Stand der Technik den Vorteil, dass die Ermittlung von Objektparametern des Objektes - als Geometrieanalyse - generisch ist, so dass keine spezifischen Ziel-Objekte definiert und trainiert werden müssen. Durch die einfache Analyse des Objekts und die Beschreibung des Objektes auf Grundlage von dreidimensionalen Informationen als Objektparameter, z. B. Länge, Breite, Höhe, Oberflächenbeschaffenheit, Normalenrichtung und Normalenwinkel, ist keine Erkennung und keine Klassifizierung des konkreten Objektes, insbesondere durch ein neuronales Netzwerk, erforderlich. Dadurch kann nur die erkannte Geometrie/Topologie als Grundlage für die Entscheidungsfindung dienen. Durch die Erfindung wird ein intelligenter Umgang mit Hindernissen, insbesondere Objekten, in einer Umgebung auf Basis einer Geometrieanalyse gewährleistet.

Im Rahmen einer Ausgestaltung des Systems hat sich als vorteilhaft herausgestellt, wenn vorgesehen ist, dass die Datenverarbeitungseinheit bei der Auswahl einer Aktion des Arbeitsgerätes zusätzlich zur Vermeidung des Objektes durch zumindest temporäre Fahrtrichtungsänderung des Arbeitsgerätes und dem Fortsetzen eines geplanten Fahrweges des Arbeitsgerätes auch das Schieben eines Objektes durch das Arbeitsgerät auswählen kann. Die Auswahl des Schiebens erfolgt ebenfalls unter Verwendung des mindestens einen, vorzugsweise einer Mehrzahl von Objektparametern. Das Schieben des Objektes durch das Arbeitsgerät erfolgt vorzugsweise so lange, bis das Objekt eine vordefinierte Position, beispielsweise an einer Wand oder anderen Grenze der Umgebung, erreicht hat. Es ist insbesondere auch vorgesehen, dass das Schieben für einen vordefinierten Zeitraum erfolgt. Nach Ablauf des vordefinierten Zeitraums erfolgt z. B. erneut das Bestimmen von räumlichen Umgebungsdaten. Diese Ausgestaltung hat gegenüber dem Stand der Technik den Vorteil, dass die Umgebung durch das Arbeitsgerät aufgeräumt werden kann, indem Objekte zur Seite oder an nicht störende Positionen in der Umgebung geschoben werden. Eine Auswahl des Schiebens erfolgt beispielsweise nur dann, wenn das Gehäuse des Arbeitsgeräts zum Schieben des jeweiligen Objekts technisch geeignet ist. Sehr kleine Objekte werden beispielsweise nur geschoben, wenn das Arbeitsgerät eine Dichtlippe aufweist, mit der in Fahrtrichtung ein Objekt geschoben werden kann. Eine Auswahl des Schiebens erfolgt vorteilhaft unter Berücksichtigung einer Ausstattung des Arbeitsgeräts, z. B. des Vorhandenseins einer Dichtlippe, einer Stoßleiste oder ähnlichen, sowie insbesondere deren Anordnung am Gehäuse, also beispielsweise dem Abstand einer Dichtlippe vom Boden.

Gemäß einer weiteren Ausgestaltung des Systems hat sich als vorteilhaft herausgestellt, wenn vorgesehen ist, dass die Datenverarbeitungseinheit ferner zum Erfassen von Bilddaten der Umgebung, zum Erkennen mindestens eines Objektes in den Bilddaten und zur Auswahl einer Aktion unter Verwendung des Ergebnisses des Erkennens ausgebildet und eingerichtet ist.

Vorzugsweise erfolgt das Erfassen der Bilddaten mit der Sensoreinheit. Bei den Bilddaten handelt es sich beispielsweise um mindestens ein RGB-Bild oder ein Graustufen-Bild zumindest eines Teils der Umgebung. Die Bilddaten werden vorzugsweise in regelmäßigen Abständen wiederholt erfasst. Beispielsweise ist die Sensoreinheit zum Erfassen bzw. Bestimmen von räumlichen Umgebungsdaten und Bilddaten ausgebildet und eingerichtet. Wenn die Sensoreinheit eine Time-of-Flight-Kamera aufweist, können in einem Bilddatensatz räumliche Umgebungsinformationen, z. B. eine Punktwolke, sowie zweidimensionale Bildinformationen der Umgebung erfasst werden. Dadurch liegen von einer Szene sowohl Bilddaten als auch räumliche Umgebungsdaten vor. Es ist auch vorgesehen, dass die Sensoreinheit, beispielsweise eine Kamera zur Erfassung von Bilddaten, und einen Ultraschallsensor aufweist.

Die Datenverarbeitungseinheit ist ferner zum Erkennen mindestens eines Objektes in den Bilddaten ausgebildet und eingerichtet. Das Erkennen erfolgt beispielsweise unter Verwendung eines Objekterkennungsalgorithmus, der insbesondere die Verwendung eines neuronalen Netzwerkes umfasst. Vorzugsweise erfolgt nicht nur ein Erkennen des Objektes in den Bilddaten, das das reine Vorhandensein eines Objekts ermittelt, sondern auch ein Identifizieren eines erkannten Objektes mittels eines Objekterkennungsalgorithmus. Auf Basis des Ergebnisses des Erkennens oder des Identifizierens - sowie auf Basis des mindestens einen Objektparameters - erfolgt anschließend die Auswahl einer Aktion des Arbeitsgerätes. Wird ein Objekt in den Bilddaten erkannt und/oder identifiziert, fließt diese Tatsache als Ergebnis in die Auswahlentscheidung ein. Wird kein Objekt erkannt, fließt dieses Ergebnis ebenfalls in die Auswahlentscheidung ein, führt aber zu einer anderen Aktion des Arbeitsgerätes. Beispielweise erfolgt das Erkennen in den Billdaten und das Erkennen in den in den räumlichen Umgebungsdaten sowie die weiteren Schritte im Wesentlichen parallel, so dass die Auswahlentscheidung - sofern erforderlich - unter Verwendung beider Resultate getroffen werden kann.

Der Objekterkennungsalgorithmus verwendet vorzugsweise ein neuronales Netzwerk, das zum Erkennen von Objekten in einer Umgebung, vorzugsweise mit Bilddaten, trainiert worden ist. Beispielsweise wird im Rahmen des Erkennens ein rechteckiger Rahmen verwendet. Ein derartiger rechteckiger Rahmen wird auch als "Bounding Box" bezeichnet. Der Algorithmus zur Objekterkennung ist jedenfalls derart ausgebildet und eingerichtet, dass er Objekte in Bilddaten erkennen und insbesondere, vorzugsweise mit einem umgebenden Rechteck, markieren kann. Beispielsweise wird als Objekterkennungsalgorithmus der Open-Source Algorithmus YOLO (You Only Look Once) in der Version 7 (Stand Juli 2022) verwendet. YOLO ist ein leistungsstarker Algorithmus für die Objekterkennung in Echtzeit. Er zeichnet sich durch seine Geschwindigkeit, hohe Genauigkeit und Vielseitigkeit aus. Anders als andere Ansätze verwendet YOLO einen einzelnen Schritt zur Objekterkennung und zeichnet vorteilhaft "Bounding Boxes" um erkannte Objekte. YOLO unterstützt Hardware-Beschleunigung für schnellere Verarbeitung und kann mehrere Objektklassen in einem Bild erkennen. Ferner ist er robust gegenüber verschiedenen Bildgrößen. Alternativ dazu kann auch der Open-Source Algorithmus MobileNet in der Version 3 (Stand Mai 2019) als Objekterkennungsalgorithmus verwendet werden.

Dieses Ausführungsbeispiel weist den Vorteil auf, dass die Auswahl einer Aktion des Arbeitsgerätes auf Basis von voneinander unabhängigen Methoden zur Erkennung eines Objektes - Verarbeitung der räumlichen Umgebungsdaten und Verarbeitung der Bilddaten - erfolgt, wodurch die Zuverlässigkeit gesteigert wird. Dadurch wird zudem gewährleistet, dass ein Arbeitsgerät auch größere Flächen autonom und ohne Interaktion mit einem Benutzer bearbeiten, beispielsweise reinigen, kann.

Um insbesondere auch im Rahmen der Erkennung eines Objektes in den Bilddaten dem Objekt eine Position im Raum zuordnen zu können, ist gemäß einer weiteren Ausgestaltung des Systems vorgesehen, dass die Datenverarbeitungseinheit zum Zuordnen von Entfernungsinformationen zumindest zu den Bildpunkten eines in den Bilddaten erkannten, insbesondere eines identifizierten, Objektes eingerichtet und ausgebildet ist. Nachdem ein Objekt in den Bilddaten, beispielsweise von einem Objekterkennungsalgorithmus, erkannt worden ist, ordnet die Datenverarbeitungseinheit den Bildpunkten des erkannten Objektes, insbesondere unter Berücksichtigung der jeweiligen Perspektive der Sensoreinheit, Abstandswerte oder Positionswerte zu, die beispielsweise aus den räumlichen Umgebungsdaten bekannt sind. Dadurch kann die Position des Objektes in den dreidimensionalen Raum zurückprojiziert werden, indem den Bildpunkten ein entsprechender Wert zugeordnet wird.

Im Rahmen einer bevorzugten Ausgestaltung des Systems wird das Ergebnis des Erkennens in den räumlichen Umgebungsdaten - der oder die Objektparameter - und das Ergebnis des Erkennens in den Bilddaten gemeinsam zur Auswahl einer Aktion des Arbeitsgerätes herangezogen. Eine weitere Ausgestaltung des Systems sieht vor, dass die Datenverarbeitungseinheit dazu ausgebildet und eingerichtet ist, bei der Auswahl der Aktion des Arbeitsgerätes das Ergebnis des Erkennens in den räumlichen Umgebungsdaten gegenüber dem Ergebnis des Erkennens in den Bilddaten, beispielsweise einem in den Bilddaten erkannten, insbesondere identifizierten, Objekt, zu priorisieren. Die auf Basis der räumlichen Umgebungsdaten erfolgende Geometrieanalyse ist vorzugsweise die primäre Methode und die Bilderkennung ein sekundäres Kriterium. Wenn z. B. im Rahmen der Bilderkennung, z. B. aufgrund von Lichteinflüssen oder optischer Täuschung, das Vorhandensein eines Objekts erkannt wurde, aber gleichzeitig in den räumlichen Umgebungsdaten kein Objekt erkannt wurde, werden die Ergebnisse der Bilderkennung ignoriert und es wird nur auf Basis des Ergebnisses des Erkennens beispielsweise die Aktion ausgewählt, den Reinigungsvorgang auf dem geplanten Fahrweg fortzusetzen.

Diese Robustheit und Sicherheit des Systems wird gemäß einer weiteren Ausgestaltung dadurch verbessert, dass vorgesehen ist, dass die Datenverarbeitungseinheit dazu ausgebildet und eingerichtet ist, ein Schieben eines erkannten Objektes nur dann auszuwählen, wenn das Objekt in den Bilddaten identifiziert worden ist und bei einem Abgleich mit einer in einem Speicher bereitgehaltenen Freigabeliste aufgefunden und/oder in einer Sperrliste nicht aufgefunden worden ist.

Durch dieses Vorgehen wird gewährleistet, dass das Objekt von dem Arbeitsgerät nur geschoben wird, wenn das Objekt bekannt ist und/oder nicht in einer Sperrliste aufgefunden werden kann, in der Objekte vermerkt sind, die in keinem Fall geschoben werden dürfen. Durch die Identifizierung des Objektes wird sichergestellt, dass das Arbeitsgerät mechanisch dazu in der Lage ist, ein Objekt zu schieben. Die Freigabeliste und/oder die Sperrliste werden beispielsweise ab Werk vorgegeben. Es ist jedoch auch vorgesehen, dass die Sperrliste und/oder die Freigabeliste durch die Datenverarbeitungseinheit und/oder durch eine Dateneingabe durch einen Benutzer modifizierbar sind. Ein Benutzer kann beispielsweise spezielle Objekte hinzufügen, die sich in seinem Haushalt befinden. Insbesondere kann dazu das Arbeitsgerät mit der Sensoreinheit verwendet werden, um ein Objekt visuell wahrzunehmen, zu scannen und anschließend zu den entsprechenden Listen hinzuzufügen.

Diese Ausgestaltung weist den Vorteil auf, dass ein Objekterkennungsalgorithmus nur für eine geringe Anzahl an Objekten trainiert werden muss, nämlich nur für solche Objekte, die geschoben werden dürfen und/oder in keinem Fall geschoben werden dürfen. Besonders bevorzugt ist daher die Verwendung einer Freigabeliste.

Um vorteilhaft sicherzustellen, dass keine Objekte von dem Arbeitsgerät geschoben werden, die nicht geschoben werden dürfen, und/oder überfahren werden, die nicht überfahren werden dürfen, ist die Datenverarbeitungseinheit zur Auswahl der Vermeidung des Objektes ausgebildet und eingerichtet, wenn ein Objekt in den Bilddaten nicht identifiziert werden kann. Dadurch ist sichergestellt, dass nur solche Objekte von dem Arbeitsgerät geschoben werden, die für das Schiebeverhalten freigegeben sind. Ferner werden nur solche Objekte überfahren, die auch dafür geeignet sind. Wenn nur ein Erkennen erfolgt, aber kein Identifizieren möglich ist, wird stets die temporäre Richtungsänderung zur Vermeidung des Objektes gewählt.

Eine weitere Ausgestaltung des Systems sieht vor, dass die Datenverarbeitungseinheit zum Berechnen mindestens eines Auswahlwertes und/oder mindestens einer Wahrscheinlichkeit ausgebildet und eingerichtet ist, ob das Arbeitsgerät ein in den Bilddaten erkanntes, insbesondere identifiziertes, Objekt durch Schieben bewegen kann. Beispielsweise unter Verwendung der räumlichen Umgebungsdaten bzw. eines in den räumlichen Umgebungsdaten erkannten Objektes und dessen geometrischen Eigenschaften kann die Datenverarbeitungseinheit einen Auswahlwert oder eine Wahrscheinlichkeit bestimmen. Beispielsweise erfolgt durch die Datenverarbeitungseinheit eine Berechnung unter Verwendung einer angenommenen Dichte eines Objektes, um dessen Gewicht abschätzen zu können. Ferner werden beispielsweise Objektparameter des Objektes berücksichtigt, um einen Auswahlwert oder eine Wahrscheinlichkeit auszurechnen, ob sich das Objekt für ein Schieben durch das Arbeitsgerät geometrisch eignet.

Die Erfindung betrifft ferner ein Verfahren zum Betrieb eines Systems, insbesondere nach einem der beschriebenen Ausführungsbeispiele. Das System weist mindestens ein Arbeitsgerät und mindestens eine Datenverarbeitungseinheit auf, wobei das Arbeitsgerät mindestens eine Sensoreinheit aufweist und zur autonomen Fortbewegung in einer Umgebung ausgebildet und eingerichtet ist. Die Datenverarbeitungseinheit weist mindestens einen Prozessor und mindestens einen Speicher auf. Das Verfahren ist zumindest durch die folgenden Verfahrensschritte gekennzeichnet:
- Bestimmen von räumlichen Umgebungsdaten mit der Sensoreinheit,
- Erkennen mindestens eines Objekts in den räumlichen Umgebungsdaten,
- Ermitteln mindestens eines Objektparameters des Objektes unter Verwendung zumindest eines Teils der räumlichen Umgebungsdaten, und
- Auswahl mindestens einer Aktion des Arbeitsgeräts in Bezug auf das Objekt in Abhängigkeit von dem ermittelten Objektparameter.

Das Verfahren ist beispielsweise von der Datenverarbeitungseinheit unter Verwendung der Sensoreinheit und ggf. weiterer Funktionen des Arbeitsgeräts durchführbar. Die Ausführungen zur Funktion des Systems können auf das Verfahren übertragen werden, so dass auf die Beschreibung aller Ausführungsbeispiele des Systems Bezug genommen wird, die auch das Verfahren weiterbilden.

Die Erfindung betrifft ferner ein Computerprogrammprodukt, umfassend Befehle, die bei der Ausführung des Programms durch eine Datenverarbeitungseinheit, mit mindestens einem Prozessor und mindestens einem Speicher, die Datenverarbeitungseinheit veranlassen, die Schritte des beschriebenen Verfahrens auszuführen.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Systems,
- Fig. 2: ein Ausführungsbeispiel eines schematischen Ablaufs der Funktion eines Systems,
- Fig. 3a: beispielhafte Darstellung des Schrittes des Erfassens von räumlichen Umgebungsdaten,
- Fig. 3b: beispielhafter Darstellung des Schrittes des Erkennens eines Objekts in den räumlichen Umgebungsdaten,
- Fig. 4a, 4b: beispielhafte Schritte der Erkennung eines Objektes in Bilddaten, und
- Fig. 5: ein Ausführungsbeispiel einer Datenverarbeitungseinheit.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

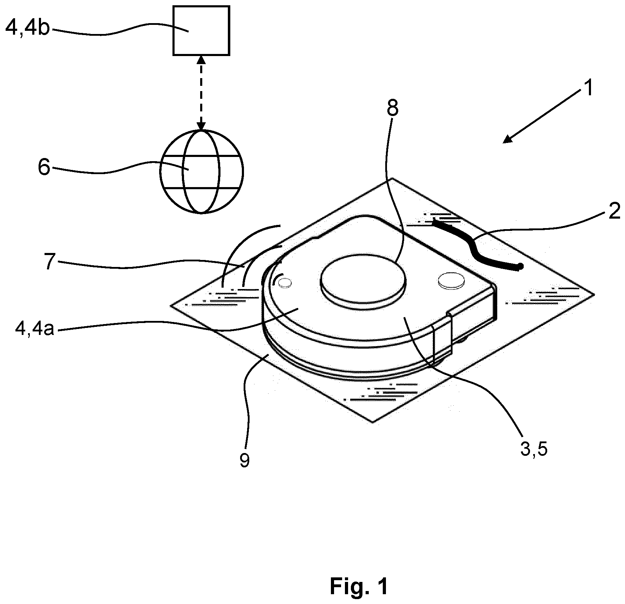

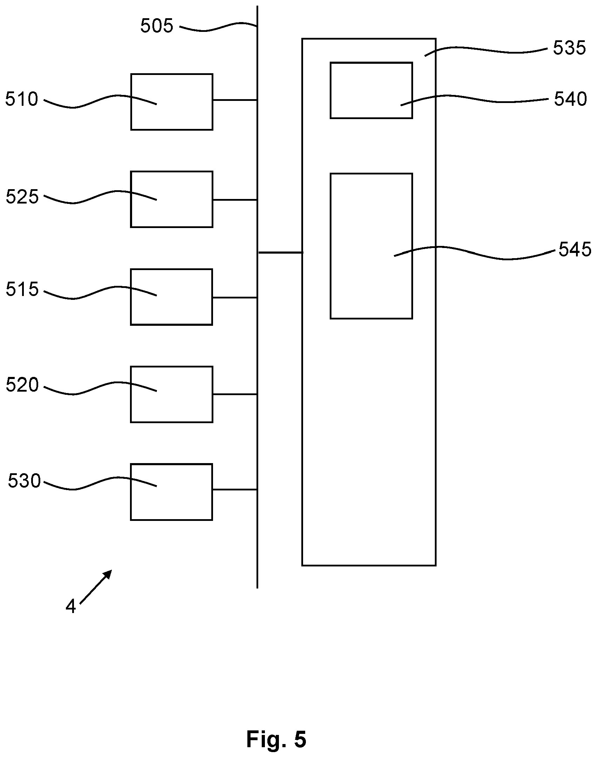

Fig. 1 zeigt schematisch ein Ausführungsbeispiel eines Systems 1, insbesondere zur Erledigung von Arbeitsaufgaben. Das System 1 weist mindestens ein Arbeitsgerät 3 und mindestens eine Datenverarbeitungseinheit 4 auf. Das System 1 ist zum Zwecke einer autonomen und kollisionsfreien Fortbewegung des Arbeitsgeräts 3 in einer Umgebung 9 zur Erkennung von Objekten 2 ausgebildet. Bei diesem Ausführungsbeispiel ist das Arbeitsgerät 3 als Reinigungsroboter ausgebildet, mit dem die Umgebung gereinigt werden kann. Das Arbeitsgerät 3 weist gemäß Fig. 1 mindestens eine Sensoreinheit 8 auf. Ein erster Teil 4a der Datenverarbeitungseinheit 4 ist innerhalb eines Gehäuses 5 des Arbeitsgeräts 3 angeordnet. Ein zweiter Teil 4b der Datenverarbeitungseinheit 4 ist als Computer ausgebildet, der räumlich entfernt zu dem Arbeitsgerät 3 angeordnet ist und über ein Datennetz 6, hier das Internet, mit dem Arbeitsgerät 3 verbunden ist. Das Arbeitsgerät 3 ist - zumindest mittelbar - über eine Funkverbindung 7 mit dem Datennetz 6 verbunden. Zu weiteren Details der Ausgestaltung der Datenverarbeitungseinheit 4 wird Bezug auf Fig. 5 genommen, wobei die Datenverarbeitungseinheit 4 mindestens einen Prozessor 510 und mindestens einen Speicher 525 aufweist. Insbesondere weist jeder Teil 4a,4b der Datenverarbeitungseinheit 4 mindestens einen Prozessor 510 und mindestens einen Speicher 525 auf.

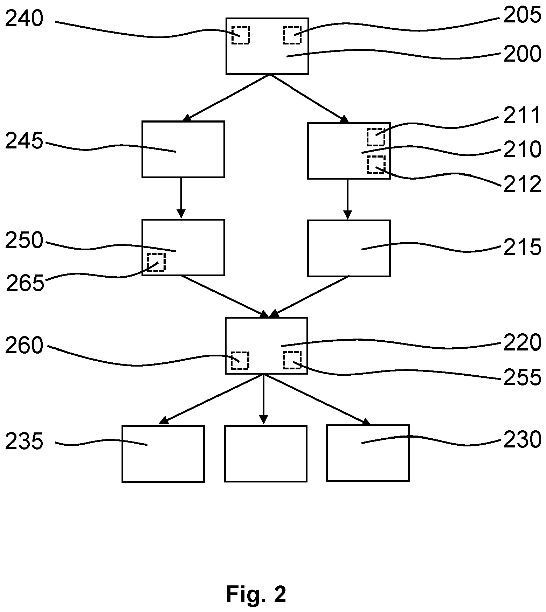

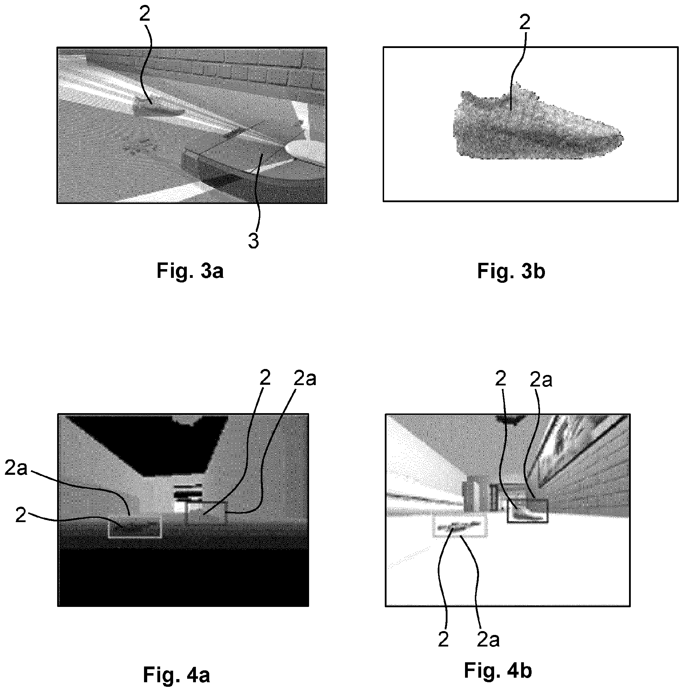

Eine schematische Darstellung der Funktion eines Systems 1 ist beispielhaft in Fig. 2 dargestellt. Die beschriebenen Schritte werden vorzugsweise von der Datenverarbeitungseinheit 4 veranlasst oder ausgeführt. Die Datenverarbeitungseinheit 4 ist zum Bestimmen 205 von räumlichen Umgebungsdaten mit der Sensoreinheit 8 ausgebildet. Bei dem vorliegenden Ausführungsbeispiel weist die Sensoreinheit 8 mindestens eine Time-of-Flight-Kamera auf, so dass das Bestimmen 205 der räumlichen Umgebungsdaten unmittelbar im Rahmen des Erfassens 200 eines Bilddatensatzes erfolgt, der Bilddaten und räumliche Umgebungsdaten umfasst. Fig. 3a zeigt beispielhaft das Erfassen 200 eines Bilddatensatzes eines Objekts 2 mit dem Arbeitsgerät 3.Die Time-of-Flight-Kamera erfasst sowohl die Bilddaten als auch die räumlichen Umgebungsdaten gleichzeitig und stellt diese der Datenverarbeitungseinheit 4 zur Verfügung. Die räumlichen Umgebungsdaten lassen sich aus den Laufzeitdaten der Time-of-Flight-Kamera bestimmen und beispielsweise als Punktwolke darstellen. Es ist auch vorgesehen, dass die räumlichen Umgebungsdaten von der Datenverarbeitungseinheit 4 unter Verwendung von Daten der Sensoreinheit 8 bestimmt, z. B. berechnet, werden.

Gemäß Fig. 2 ist die Datenverarbeitungseinheit 4 ferner zum Erkennen 210 mindestens eines Objektes 2 in den räumlichen Umgebungsdaten ausgebildet. Das Erkennen 210 umfasst vorzugsweise ein Filtern 211 sowie Segmentieren 212 der räumlichen Umgebungsdaten unter Verwendung der euklidischen Clusterextraktionsmethode. Fig. 3b zeigt beispielhaft ein erkanntes Objekt 2 in den räumlichen Umgebungsdaten, dargestellt als geclusterte dreidimensionale Punktwolke.

Sofern ein Objekt 2 in den räumlichen Umgebungsdaten erkannt worden ist, ist die Datenverarbeitungseinheit 4 gemäß Fig. 2 zum Ermitteln 215 einer Mehrzahl von Objektparametern des Objektes 2 unter Verwendung zumindest eines Teils der räumlichen Umgebungsdaten ausgebildet und eingerichtet. Dabei wird vorzugsweise der Teil der räumlichen Umgebungsdaten ausgewählt, der das Objekt 2 repräsentiert. Objektparameter sind beispielsweise die Höhe, die Breite und die Länge einer das Objekt 2 umgebenden "Bounding Box", die Länge, Breite, Höhe des Objektes 2 selbst, eine Oberflächentextur oder ein Winkel oder eine Richtung einer Oberflächennormalen des Objekts 2. Die Datenverarbeitungseinheit 4 ist ferner zur Auswahl 220 mindestens einer Aktion des Arbeitsgerätes 3 in Bezug auf das Objekt 2 in Abhängigkeit von mindestens einem ermittelten Objektparameter ausgebildet und eingerichtet.

Die Datenverarbeitungseinheit 4 ist insbesondere zur Auswahl 220 zumindest zwischen einer Vermeidung 225 des Objektes 2 durch zumindest temporäre Richtungsänderung des Arbeitsgerätes 3, einem Fortsetzen 230 eines geplanten Fahrweges des Arbeitsgerätes 3 oder einem Schieben 235 des Objektes 2 ausgebildet und eingerichtet.

Im Rahmen des beschriebenen Erfassens 200 eines Bilddatensatzes durch die Sensoreinheit 8 mit einer Time-of-Flight-Kamera erfolgt auch das Erfassen 240 der Bilddaten der Umgebung 9, also der gleichen Szene, die auch durch die räumlichen Umgebungsdaten repräsentiert wird. Nach dem Erfassen 240 der Bilddaten durch die Datenverarbeitungseinheit 4 mit der Sensoreinheit 8 erfolgt das Erkennen 245 mindestens eines Objektes in den Bilddaten. Das Erkennen 245 erfolgt vorzugsweise unter Verwendung eines Objekterkennungsalgorithmus. Fig. 4a zeigt beispielhaft das Erkennen 245 von zwei Objekten 2, die mit einem das Objekt 2 umgebenden Rechtsecks 2a, einer sogenannten "Bounding Box" markiert sind. Der Objekterkennungsalgorithmus verwendet vorzugsweise mindestens ein neuronales Netzwerk. Wird kein Objekt erkannt, wird dieses Ergebnis für die Auswahl 220 bereitgestellt.

Wird ein Objekt 2 in den Bilddaten erkannt, erfolgt besonders bevorzugt nach dem Erkennen 245 auch ein Identifizieren 250 eines erkannten Objektes 2 in den Bilddaten. Fig. 4b zeigt beispielhaft die in den Bilddaten nunmehr identifizierten Objekte 2. Zudem erfolgt ein Zuordnen 265 von Entfernungsinformationen zu den Bildpunkten eines in den Bilddaten erkannten und identifizierten Objektes 2.

Die Datenverarbeitungseinheit 4 ist gemäß Fig. 2 nachfolgend zur Auswahl 220 einer Aktion des Arbeitsgerätes 3 unter Verwendung des Ergebnisses des Identifizierens 250 sowie des Ergebnisses des Erkennens 215 in den räumlichen Umgebungsdaten, hier der Objektparameter aus den räumlichen Umgebungsdaten, ausgebildet und eingerichtet. Dabei werden bei der Auswahl 220 der Aktion des Arbeitsgerätes 3 der oder die ermittelten Objektparameter bzw. das Ergebnis des Erkennens 215 gegenüber einem in den Bilddaten erkannten Objekt 2 priorisiert. Dabei ist die Datenverarbeitungseinheit 4 derart ausgebildet und eingerichtet, dass ein Auswählen 220 des Schiebens 235 nur erfolgt, wenn ein identifiziertes Objekt 2 bei einem Abgleichen 255 in einer Freigabeliste aufgefunden worden ist, also die Art und Eigenschaften des Objektes 2 eindeutig festgestellt sind. Das hat den Vorteil, dass das neuronale Netzwerk nur für eine geringe Anzahl an Objekten trainiert werden muss, nämlich genau die Objekte, die geschoben werden dürfen.

Die Datenverarbeitungseinheit 4 ist ferner vor der Auswahl des Schiebens 235 als weiteres Kriterium zur Auswahl 220 zum Berechnen 260 einer Wahrscheinlichkeit ausgebildet und eingerichtet, ob das Arbeitsgerät 3 ein in den Bilddaten erkanntes Objekt 2 durch Schieben 235 bewegen kann. Wenn der Auswahlwert oder die Wahrscheinlichkeit einen vorbestimmten Schwellenwert nicht erreicht, wird beispielsweise das Vermeiden 225 ausgewählt.

Fig. 5 zeigt eine vereinfachte Datenverarbeitungseinheit 4 für ein System 1 der beschriebenen Ausführungsbeispiele. Es ist auch vorgesehen, dass einzelne Elemente der Datenverarbeitungseinheit 4 mehrfach vorhanden sind, insbesondere wenn die Datenverarbeitungseinheit 4 teilweise in einem Arbeitsgerät 3 und teilweise von einem räumlich entfernten Computer realisiert ist. Fig. 5 zeigt eine schematische Darstellung einer Ausführungsform einer Datenverarbeitungseinheit 4, die einige oder alle Schritte zu den in den verschiedenen Ausführungsformen beschriebenen Verfahren bzw. deren Schritte ausführen kann.

Die Datenverarbeitungseinheit 4 ist mit Hardwareelementen dargestellt, die über einen Bus 505 elektrisch gekoppelt sind oder gegebenenfalls auf andere Weise miteinander kommunizieren. Die Hardwareelemente können einen oder mehrere Prozessoren 510, einschließlich und ohne Einschränkung einen oder mehrere Allzweckprozessoren und/oder einen oder mehrere Spezialprozessoren, ein oder mehrere Eingabegeräte 515 und ein oder mehrere Ausgabegeräte 520 umfassen. Die Datenverarbeitungseinheit 4 weist ferner eine oder mehrere Speicher 525 auf und/oder steht mit diesen in Verbindung.

Die Datenverarbeitungseinheit 4 kann ferner ein Kommunikationssubsystem 530 aufweisen. In einigen Ausführungsformen umfasst die Datenverarbeitungseinheit 4 außerdem einen Arbeitsspeicher 535. Die Datenverarbeitungseinheit 4 kann auch Software-Elemente enthalten, die sich - wie beispielhaft dargestellt - im Arbeitsspeicher 535 befinden. Davon umfasst sein können ein Betriebssystem 540, Gerätetreiber, ausführbare Bibliotheken und/oder ein anderer Code, beispielsweise ein oder mehrere Anwendungsprogramme 545.

Lediglich beispielhaft können ein oder mehrere Schritte, die in Bezug auf die Funktionen des Systems oder das Verfahren beschrieben sind, als Code und/oder Anweisungen implementiert werden, die von einem Computer und/oder einem Prozessor innerhalb eines Computers ausführbar sind; in einem Aspekt können dann ein solcher Code und/oder solche Anweisungen verwendet werden, um einen Allzweckcomputer oder ein anderes Gerät zu konfigurieren und/oder anzupassen, um ein oder mehrere Schritte gemäß den beschriebenen Verfahren oder Funktionen des Systems auszuführen.

Ein Teil dieser Anweisungen und/oder der Code kann auf einem, computerlesbaren Speichermedium, wie dem/den oben beschriebenen Speicher 525, gespeichert werden. Wie oben erwähnt, können in einem Aspekt einige Ausführungsformen ein Computersystem wie die Datenverarbeitungseinheit 4 verwenden, um Verfahren in Übereinstimmung mit verschiedenen Ausführungsformen bzw. die Funktionen des Systems 1 auszuführen. Gemäß einer Ausführungsform werden einige oder alle Schritte eines Verfahrens oder Funktionen des Systems 1 von der Datenverarbeitungseinheit 4 als Reaktion auf die Ausführung einer oder mehrerer Sequenzen von einem oder mehreren Befehlen durch den Prozessor 510 durchgeführt, die in das Betriebssystem 540 und/oder einen anderen Code, wie ein Anwendungsprogramm 545, das im Arbeitsspeicher 535 enthalten ist, integriert sein können. Solche Anweisungen können in den Arbeitsspeicher 535 von einem anderen computerlesbaren Medium, wie einem oder mehreren der Speicher 525, eingelesen werden. Lediglich als Beispiel könnte die Ausführung der im Arbeitsspeicher 535 enthaltenen Befehlsfolgen den/die Prozessor(en) 510 veranlassen, ein oder mehrere Schritte der beschriebenen Verfahren oder Funktionen des Systems durchzuführen.

Die Begriffe "maschinenlesbares Medium" und "computerlesbares Medium", wie sie hier verwendet werden, beziehen sich auf jedes Medium, das an der Bereitstellung von Daten beteiligt ist, die eine Datenverarbeitungseinheit veranlassen, in einer bestimmten Weise zu arbeiten. In einer Ausführungsform, die unter Verwendung der Datenverarbeitungseinheit 4 implementiert wird, können verschiedene computerlesbare Medien an der Bereitstellung von Anweisungen/Codes für den/die Prozessor(en) 510 zur Ausführung beteiligt sein und/oder zum Speichern und/oder Übertragen solcher Anweisungen/Codes verwendet werden. In vielen Implementierungen ist ein computerlesbares Medium ein physisches und/oder greifbares Speichermedium. Ein solches Medium kann die Form eines nichtflüchtigen Mediums oder eines flüchtigen Mediums haben. Zu den nichtflüchtigen Medien gehören beispielsweise optische und/oder magnetische Platten, wie die Speicher 525. Zu den flüchtigen Medien gehören unter anderem dynamische Speicher, wie der Arbeitsspeicher 535.

Das Kommunikationssubsystem 530 und/oder seine Komponenten empfangen üblicherweise Signale, und der Bus 505 kann dann die Signale und/oder die Daten, Anweisungen usw., die von den Signalen getragen werden, zum Arbeitsspeicher 535 transportieren, aus dem der/die Prozessor(en) 510 die Anweisungen abruft und ausführt. Die vom Arbeitsspeicher 535 empfangenen Anweisungen können optional vor oder nach der Ausführung durch den/die Prozessor(en) 510 auf Speicher 525 gespeichert werden.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: System
- 2: Objekt
- 2a: Rechteck
- 3: Arbeitsgerät
- 4: Datenverarbeitungseinheit
- 4a: Erster Teil
- 4b: Zweiter Teil
- 5: Gehäuse
- 6: Datennetz
- 7: Funkverbindung
- 8: Sensoreinheit
- 9: Umgebung

- 200: Erfassen
- 205: Bestimmen
- 210: Erkennen
- 211: Filtern
- 212: Segmentieren
- 215: Ermitteln
- 220: Auswahl
- 225: Vermeidung
- 230: Fortsetzen
- 235: Schieben
- 240: Erfassen
- 245: Erkennen
- 250: Identifizieren
- 255: Abgleichen
- 260: Berechnen
- 265: Zuordnen
- 505: Bus
- 510: Prozessor
- 515: Eingabegerät
- 520: Ausgabegerät
- 525: Speicher
- 530: Kommunikationssubsystem
- 535: Arbeitsspeicher
- 540: Betriebssystem
- 545: Anwendungsprogramm

## Patentansprüche

1. System (1), aufweisend mindestens ein Arbeitsgerät (3) und mindestens eine Datenverarbeitungseinheit (4), wobei das Arbeitsgerät (3) mindestens eine Sensoreinheit (8) aufweist und zur autonomen Fortbewegung in einer Umgebung (9) ausgebildet und eingerichtet ist,
wobei die Datenverarbeitungseinheit (4) mindestens einen Prozessor (510) und mindestens einen Speicher (525) aufweist,
wobei die Datenverarbeitungseinheit (4) zum Bestimmen (205) von räumlichen Umgebungsdaten mit der Sensoreinheit (8),
zum Erkennen (210) mindestens eines Objekts (2) in den räumlichen Umgebungsdaten,
zum Ermitteln (215) mindestens eines Objektparameters des Objekts (2) unter Verwendung zumindest eines Teils der räumlichen Umgebungsdaten, und zur Auswahl (220) mindestens einer Aktion des Arbeitsgeräts (3) in Bezug auf das Objekt (2) in Abhängigkeit von dem mindestens einen, ermittelten Objektparameter ausgebildet und eingerichtet ist.

2. System (1) nach Anspruch 1,
**dadurch gekennzeichnet, dass**
zumindest ein Teil (4a) der Datenverarbeitungseinheit (4) in dem Arbeitsgerät (3) angeordnet ist und/oder dass zumindest ein Teil (4b) der Datenverarbeitungseinheit (4) über ein Datennetz (6) mit dem Arbeitsgerät (3) verbindbar ist.

3. System (1) nach Anspruch 1 oder 2,
**dadurch gekennzeichnet, dass**
das Erkennen (210) mindestens eines Objektes (2) in den räumlichen Umgebungsdaten das Filtern (211) und/oder ein Segmentieren (212) umfasst, insbesondere dass das Filtern (211) das Filtern von Bildpunkten, die einen vorbestimmten Schwellenwert überschreiten und/oder das Anwenden einer euklidischen Clusterextraktionsmethode und/oder das Filtern von Bildpunkten umfasst, die zur Bodenoberfläche gehören.

4. System (1) nach einem der Ansprüche 1 bis 3,
**dadurch gekennzeichnet, dass**
der Objektparameter eine Länge des Objekts (2), eine Breite des Objekts (2), eine Höhe des Objekts (2), eine Länge, eine Breite und/oder eine Höhe eines das Objekt (2) umgebenden Rechtecks (2a), eine Oberflächenbeschaffenheit des Objektes (2), eine Richtung einer Oberflächennormalen mindestens einer Fläche des Objektes (2) und/oder ein Winkel einer Oberflächennormalen mindestens einer Fläche des Objektes (2) beschreibt.

5. System (1) nach einem der Ansprüche 1 bis 4,
**dadurch gekennzeichnet, dass**
die Datenverarbeitungseinheit (4) zur Auswahl (220) mindestens einer Aktion zumindest zwischen der Aktion einer Vermeidung (225) des Objektes (2) durch zumindest temporäre Fahrtrichtungsänderung des Arbeitsgeräts (3) und der Aktion des Fortsetzens (230) eines geplanten Fahrweges des Arbeitsgeräts (3) ausgebildet und eingerichtet ist.

6. System (1) nach Anspruch 5,
**dadurch gekennzeichnet, dass**
die Datenverarbeitungseinheit (4) bei der Auswahl (220) einer Aktion auch zur Auswahl (220) eines Schiebens (235) des Objekts (2) durch das Arbeitsgerät (3) ausgebildet und eingerichtet ist.

7. System (1) nach einem der Ansprüche 1 bis 6,
**dadurch gekennzeichnet, dass**
die Datenverarbeitungseinheit (4) ferner zum Erfassen (240) von Bilddaten der Umgebung, insbesondere mittels des Sensoreinheit (8), zum Erkennen (245) mindestens eines Objekts (2) in den Bilddaten, bevorzugt auch zum Identifizieren (250) mindestens eines erkannten Objekts (2) in den Bilddaten, und zur Auswahl (220) einer Aktion des Arbeitsgeräts (3) unter Verwendung des Ergebnisses des Erkennens (245) in den Bilddaten ausgebildet und eingerichtet ist.

8. System (1) nach Anspruch 7,
**dadurch gekennzeichnet, dass**
das Erkennen (245) in den Bilddaten, insbesondere das Identifizieren (250), mit mindestens einem Objekterkennungsalgorithmus erfolgt, bevorzugt dass der Objekterkennungsalgorithmus mindestens ein neuronales Netzwerk verwendet.

9. System (1) nach einem der Ansprüche 7 oder 8,
**dadurch gekennzeichnet, dass**
die Datenverarbeitungseinheit (4) zum Zuordnen (265) von Entfernungsinformationen zumindest zu den Bildpunkten eines in den Bilddaten erkannten, insbesondere eines identifizierten, Objektes (2) eingerichtet und ausgebildet ist.

10. System nach einem der Ansprüche 7 bis 9
**dadurch gekennzeichnet, dass**
die Datenverarbeitungseinheit (4) dazu ausgebildet und eingerichtet ist, bei der Auswahl (220) einer Aktion des Arbeitsgeräts (3) das Ergebnis eines Erkennens (210) in den räumlichen Umgebungsdaten gegenüber einem Ergebnis des Erkennens (245) in den Bilddaten zu priorisieren.

11. System nach Anspruch 6 und einem der Ansprüche 7 bis 10,
**dadurch gekennzeichnet, dass**
die Datenverarbeitungseinheit (4) dazu ausgebildet und eingerichtet ist, ein Schieben (235) des Objektes (2) nur dann auszuwählen, wenn das Objekt (2) in den Bilddaten identifiziert worden ist und bei einem Abgleichen (255) mit einer in einem Speicher (525) bereitgehaltenen Freigabeliste aufgefunden und/oder in einer Sperrliste nicht aufgefunden worden ist.

12. System nach einem der Ansprüche 7 bis 11,
**dadurch gekennzeichnet, dass**
stets die Auswahl (220) der Vermeidung (225) des Objektes (2) erfolgt, wenn ein Objekt (2) in den Bilddaten nicht identifiziert werden kann.

13. System nach einem der Ansprüche 7 bis 12,
**dadurch gekennzeichnet, dass**
die Datenverarbeitungseinheit (4) zum Berechnen (260) mindestens eines Auswahlwertes und/oder mindestens einer Wahrscheinlichkeit ausgebildet und eingerichtet ist, ob das Arbeitsgerät (3) ein in den Bilddaten erkanntes, insbesondere identifiziertes, Objekt (2) durch Schieben (235) bewegen kann.

14. Verfahren zum Betrieb eines Systems (1), insbesondere nach einem der Ansprüche 1 bis 13, aufweisend mindestens ein Arbeitsgerät (3) und mindestens eine Datenverarbeitungseinheit (4), wobei das Arbeitsgerät (3) mindestens eine Sensoreinheit (8) aufweist und zur autonomen Fortbewegung in einer Umgebung (9) ausgebildet und eingerichtet ist, wobei die Datenverarbeitungseinheit (4) mindestens einen Prozessor (510) und mindestens einen Speicher (525) aufweist,
**gekennzeichnet zumindest durch** die folgenden Verfahrensschritte:
- Bestimmen (205) von räumlichen Umgebungsdaten mit der Sensoreinheit (8),
- Erkennen (210) mindestens eines Objektes (2) in den räumlichen Umgebungsdaten,
- Ermitteln (215) mindestens eines Objektparameters des Objektes (2) unter Verwendung zumindest eines Teils der räumlichen Umgebungsdaten, und
- Auswahl (220) mindestens einer Aktion des Arbeitsgeräts (3) in Bezug auf das Objekt (2) in Abhängigkeit von dem ermittelten Objektparameter.

15. Computerprogrammprodukt, umfassend Befehle, die bei der Ausführung des Programms durch eine Datenverarbeitungseinheit (4,4a,4b), mit mindestens einem Prozessor (510) und mindestens einem Speicher (525), die Datenverarbeitungseinheit (4,4a,4b) veranlassen, die Schritte des Verfahrens nach Anspruch 14 auszuführen.
